# EUROPÄISCHE PATENTSCHRIFT

(11) **EP 0 905 864 B1**
(45) Veröffentlichungstag und Bekanntmachung des Hinweises auf die Patenterteilung: **24.11.2004**
(21) Anmeldenummer: 98117384.2
(22) Anmeldetag: 14.09.1998
(51) Int. Cl.: H02K 15/12

(54) **Verfahren zur Verfestigung von Wicklungsspulen elektrischer Maschinen**
Process for the consolidation of the coil windings for electric machines
Procédé de consolidation des enroulements pour machines électriques

(30) Priorität: 25.09.1997 DE 19742427
(43) Veröffentlichungstag der Anmeldung: 31.03.1999
(73) Patentinhaber: SIEMENS AKTIENGESELLSCHAFT, 80333 München (DE)
(72) Erfinder: Senger, Rudolf, Dipl.-Ing. (FH), 91257 Pegnitz (DE)

(56) Entgegenhaltungen:
- EP-A- 0 070 661
- US-A- 4 152 103
- PATENT ABSTRACTS OF JAPAN vol. 011, no. 346 (E-556), 12. November 1987 (1987-11-12) & JP 62 126844 A (TOSHIBA CORP), 9. Juni 1987 (1987-06-09)

## Beschreibung

Die Erfindung betrifft ein Verfahren und eine Vorrichtung zur Verfestigung von Wicklungsspulen elektrischer Maschinen, welche Wicklungsspulen Nut- und Stirnseitenbereiche enthalten und aus mindestens einem mit verbackfähigem Material versehenen Einzelleiter bestehen.

Bisher werden die Nutteile der zu verfestigenden Isolationen von Wicklungsspulen bzw. Stäben mit Hilfe von Gas, Öl oder elektrobeheizten Einzel- oder Etagenpressen auf die erforderliche Temperatur gebracht, um das Verfestigungsmaterial zu verbacken. Dabei wird unter einem vorgegebenen Druck der Pressen die Wicklungspule bzw. der Stab eine gewisse Zeit erwärmt. Je nach Spulenquerschnitt sind dabei Erwärmungsvorgänge von bis zu einer Stunde keine Seltenheit. Anschließend werden die Spulen wieder unter Preßdruck abgekühlt. Es werden dabei die gesamten Spulen erwärmt. Dies ist z.B. erwünscht bei Wicklungspulen von Hauptpolen für Gleichstrommaschinen. Bei Wicklungsspulen oder Stäben für Drehstrommotoren, wo nur die in den Nuten befindlichen Teile der Wicklungsspulen oder Stäben erwärmt werden sollen, tritt aufgrund des langen Erwärmungsvorganges ein Wärmefluß in die Spulenstirnseitenbereiche auf. Eine derartige Vorrichtung ist aus EP 00 70 661 A1 bekannt, als Alternative zur direkten Erwärmung der elektrischen Leiter wird dabei die induktive Erwärmung erwähnt.

Die auf dem Markt befindlichen Leiterisolationsmaterialien haben dabei aufgrund des Wärmeflusses des Leiters auch außerhalb des Nutseitenbereiches den Nachteil, daß sie im Ziehradienbereich verkleben. Dies führt zu einer qualitätsmindernden bis unzulässigen Beschädigung der Leiterisolierung beim Spulenziehen. Versuche, den Wärmefluß zu unterbinden bzw. durch Kühlung außerhalb des Nutseitenbereiches den Wärmefluß zu verhindern, zeigen, daß diese Maßnahmen sehr aufwendig sind und keine reproduzierbaren Qualitätsergebnisse liefern. Bei Änderungen von z.B. Spulenquerschnitten sind die Prozeßdaten (Erwärmungsdauer, Erwärmungsintensität) jeweils neu zu ermitteln.

Die Aufgabe der Erfindung besteht demzufolge darin, bei reproduzierbarer Qualität des Verbackvorganges der Leiterisolationsmaterialien auf oder in Wicklungsspulen und/oder Stäben die Erwärmungsphase soweit zu reduzieren, daß der schädliche Wärmefluß in die Spulenstirnseitenbereiche nahezu verschwindet. Außerdem soll der Erwärmungsprozeß auf die vorliegenden Spulenquerschnitte und Leiterisolationsmaterialien abstimmbar sein.

Die Lösung der gestellten Aufgabe gelingt durch ein Verfahren nach Anspruch 1 oder eine Vorrichtung nach Anspruch 5.

Diese Verfahrensschritte führen zu einer erheblichen zeitlichen Reduzierung des Erwärmungsvorganges von ca. einer Stunde auf einige Sekunden. Die Form bzw. die Querschnitte der Wicklungsspulen ( Flach- oder Runddrahtwicklungen, Faßspulen, Hauptpolspulen und Wendepolspulen für Gleichstrommaschinen, Halbform- Rechteck- und Ovalspulen) als auch Stäbe (z.B.: Gitter-, Roebel-, Turbo-, Zwingenstäbe) bilden nun einen vorbestimmbaren Parameter während der induktiven Erwärmung. Es tritt aufgrund des stark reduzierten Erwärmungsvorganges (ca. einige Sekunden) nahezu keine Wärmeableitung in den Ziehradienbereich der Wicklungsspulen auf, so daß dort auch keine ungewollten Verklebungen auftreten, die zu einer Beschädigung der Leiterisolation führen. Um diese Verklebungen auf jeden Fall auszuschließen, werden nur die in den Nuten befindlichen Nutbereiche der Wicklungsspulen induktiv erwärmt. Durch weitere Kühlsysteme, die jeweils mehrere Kühlelementeaufweisen im Ziehradienbereich der Wicklungsspulen, kann der unerwünschte Wärmefluß zusätzlich unterbunden werden. Ein weiterer wirtschaftlicher Vorteil besteht darin, daß diese Verfahrensschritte auch durch geeignette Modifikation bekannter Einzel- oder Etagenpressen durchgeführt werden können.

In einer weiteren Ausführungsform der Erfindung ist durch eine vorgebbare nieder- mittel- oder hochfrequente Speisung der Induktoren die Eindringtiefe in das Verbackmaterial der Leiterisolierung aufgrund des "Skin-Effekts" vorbestimmt. Somit wird eine reproduzierbare, normgerechte Qualität der Isolierung erreicht wird.

Die Kühlelemente der Induktoren selbst und vorzugsweise zusätzlich eingesetzte Kühlelemente bzw. Kühlsysteme im Nutoder im Spulenstirnseitenbereich beschleunigen den gesamten Verbackungsprozeß und gestatten eine zügige Weiterverarbeitung der Wicklungsspulen bzw. Stäben, da kurze Abkühlzeiten auftreten.

Die in einer weiteren Ausführungsform führen zeitgleich durchgeführten Verfahrensschritte, wie Erwärmen und Pressen, oder Pressen und Abkühlen, zu einer weiteren Reduzierung der Durchlaufzeiten der Wicklungsspulen oder Stäben und erhöhen somit die Bearbeitungskapazität.

Eine Steigerung der Durchsatzzahlen der Wicklungsspuleh oder Stäben kann ferner in einer weiteren bevorzugten Ausführungsform durch einen kontinuierlichen Prozeß erreicht werden. Dabei wird vorzugsweise durch einer auf einer Art Fertigungslinie befindlichen Preßvortichtung die Wicklungsspule bzw. der Stab fixiert und somit in die induktive Erwärmungsvorrichtung bewegt, in der die im Preßverband befindliche Wicklungsspule oder der Stab je nach Spulenart unterschiedlich Verweildauer aufweist. Anschließend wird der Preßverband in den Kühlungsbereich bewegt, um dort möglichst schnell auf Temperaturen von ca. 40- 50°C heruntergekühlt zu werden, die eine Weiterverarbeitung der Wicklungsspule bzw. des Stabes zulassen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in schematischer Darstellung eine Vorrichtung zur induktiven Erwärmung von Wicklungsspulen bzw. Stäben,
- FIG 2: eine Formspule,
- FIG 3: einen Zwingenstab,
- FIG 4: einen Hauptpolwicklungsspule eines Gleichstrommotors,
- FIG 5: eine weitere prinzipielle Darstellung einer induktiven Erwärmungsvorrichtung,
- FIG 6: einen prinzipiell dargestellten Ablauf eines Erwärmungsverfahrens und
- FIG 7: einen prinzipiellen Aufbau eines in einer Art Fließband realisierten kontinuierlichen Herstellungsverfahren.

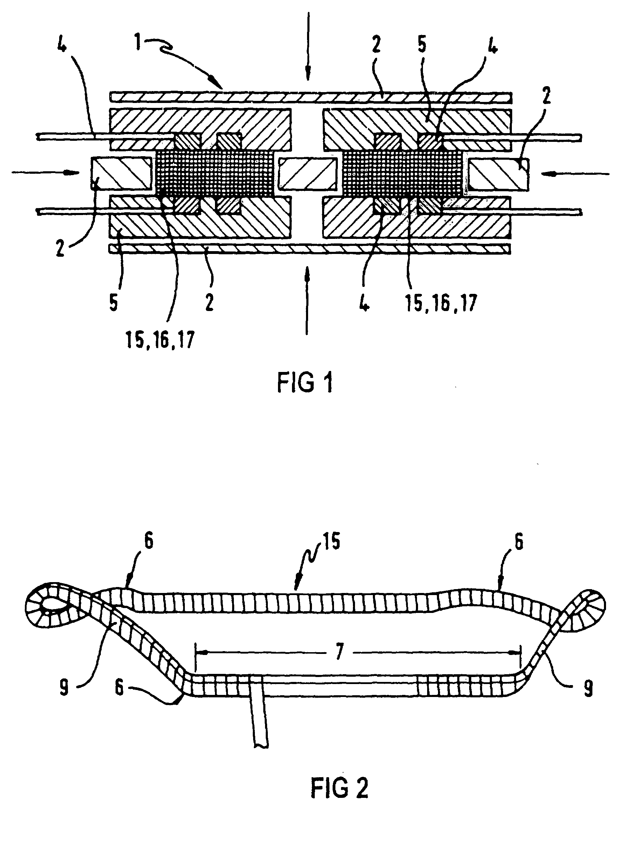

FIG 1 zeigt eine induktive Erwärmungsvorrichtung 1 mit horizontalen und vertikalen Preßelementen 2. Die in eine derartige induktive Erwärmungsvorrichtung 1 eingelegte Wicklungsspule 15,17, bzw. Stab 16 ist von Induktoren 4 und deren Kühlelementen 5 umgeben. Dabei werden die Preßelemente 2 und die Wicklungsspulen 15,17 und Stäbe 16 gekühlt. Mehrere Kühlelemente 5 sind zu einem Kühlsystem 20 zusammengefaßt. Es sind auch mehrere parallel arbeitenden Kühlsysteme 20 einsetzbar, um entweder die einzelnen Kühlprozesse besser steuern zu konnen oder um die Wärmebelastung dem induktiven Erwärmungsprozess 31 besser anzupassen.

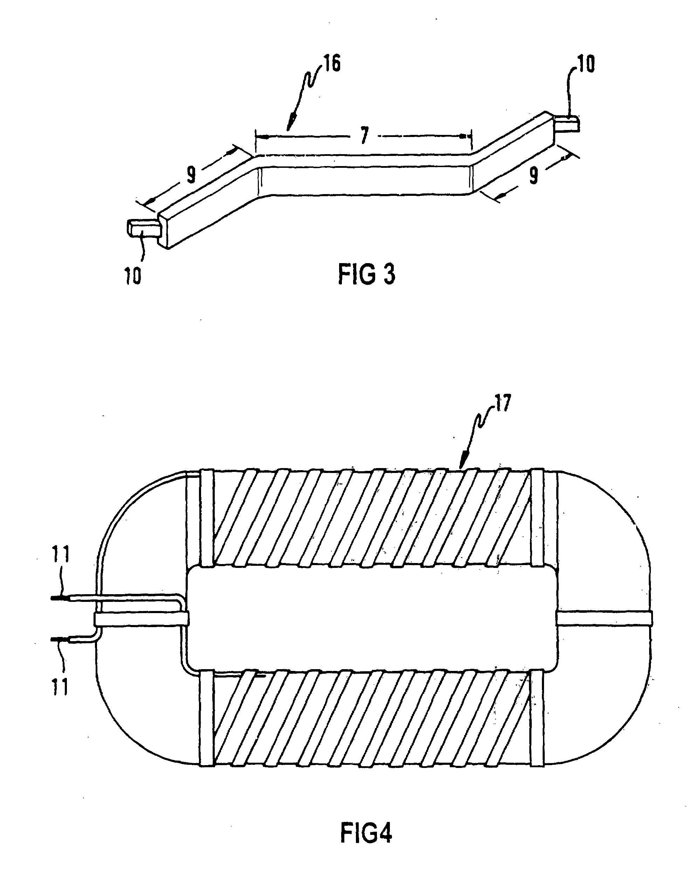

FIG 2 zeigt eine bereits gezogene und bewickelte Formspule 15, mit ihren für herkömmliche Erwärmungprozeße kritischen Ziehradien 6. Dabei sind wie in FIG 3, die Nutbereiche 7 und die Spulenstirnseitenbereiche 9 sichtbar. Ein Zwingenstab 16 zeigt außerdem die Schaltenden 10. FIG 4 zeigt eine Hauptpolwicklungsspule 17 eines Gleichstrommotors mit einem gewickelten Draht und den beiden Anschlüssen 11.

Die in FIG 1 beschriebene Vorrichtung 1 ist für alle Wicklungsspulen 15,17 und Stäbe 16 an die jeweiligen Abmessungen und Anforderungen anpaßbar. Diese induktive Erwärmungsvorrichtung 1 ist aufgrund der kurzen Einwirkzeit sowohl für Spulen 15 bzw. Stäbe 16 einsetzbar, deren Nutbereiche erwärmt werden, Formspulen 15 und Zwingstäbe 16 als auch für gesamte Hauptpolwicklungsspulen 17. Prozeßparameter wie Eindringtiefe der Wärmestrahlung, Einwirkbereiche der Wärmestrahlung auf der Wicklungsspule bzw. den Stab, können mit festgelegten Qualitätskriterien wie z. B. Aushärtegrad oder Temperaturklasse der elektrischen Maschine, vorab bestimmt werden.

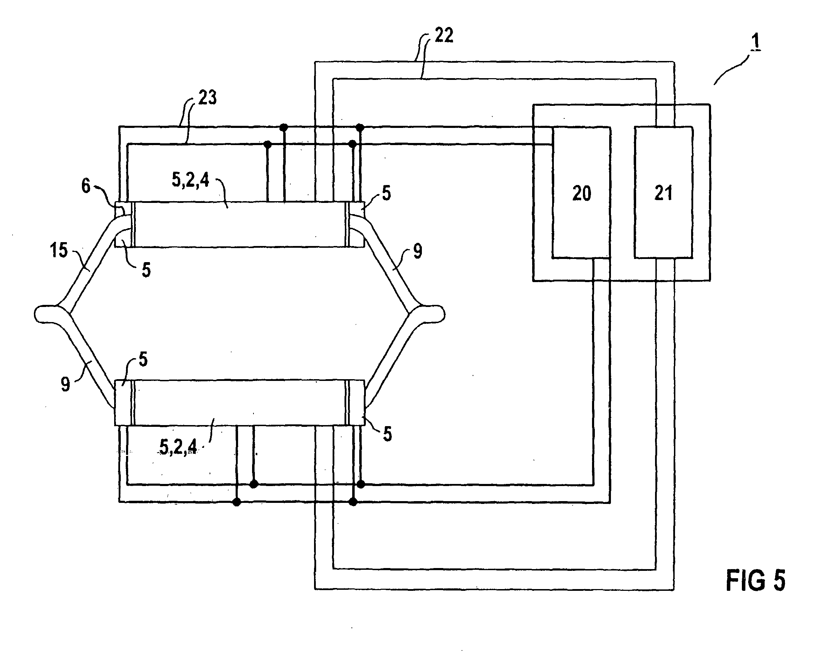

FIG 5 zeigt eine Formspule 15, die in eine derartige induktive Erwärmungsvorrichtung 1 eingesetzt ist. Dabei sind die Nutbereiche 7 der Formspule 15 in dem Heizbereich der Induktoren 4 als auch in dem Bereich der Kühlelemente 5 und der horizontalen und vertikalen Presselemerte 2. Speziell für die Ziehradien 6 der Formspule 15 sind weitere Kühlelemente 5 angeordnet. Sämtliche Kühlelemente 5 sowohl der Ziehradien 6 als auch der in dieser Darstellung nicht sichtbaren Nutbereiche 7 sind vorzugsweise parallel über Kuhlleitungen 23 an ein Kühlsystem 20 angeschlossen. Die Induktoren 4 sind über elektrische Versorgungsleitungen 22 an ein Netzund Steuerteil 21 angeschlossen. Das Netz- und Steuerteil 21 regelt sowohl die Frequenz als auch die Einwirkzeit der Induktoren 4. Außerdem kann das Netz- und Steuerteil 21 das Kühlsystem 20 ansteuern, wenn mehr oder weniger Kühlleistung aufgrund geänderter Parameter (Z.B. Querschnitt eines Stabes 16, Einwirkzeit etc. ) angefordert wird.

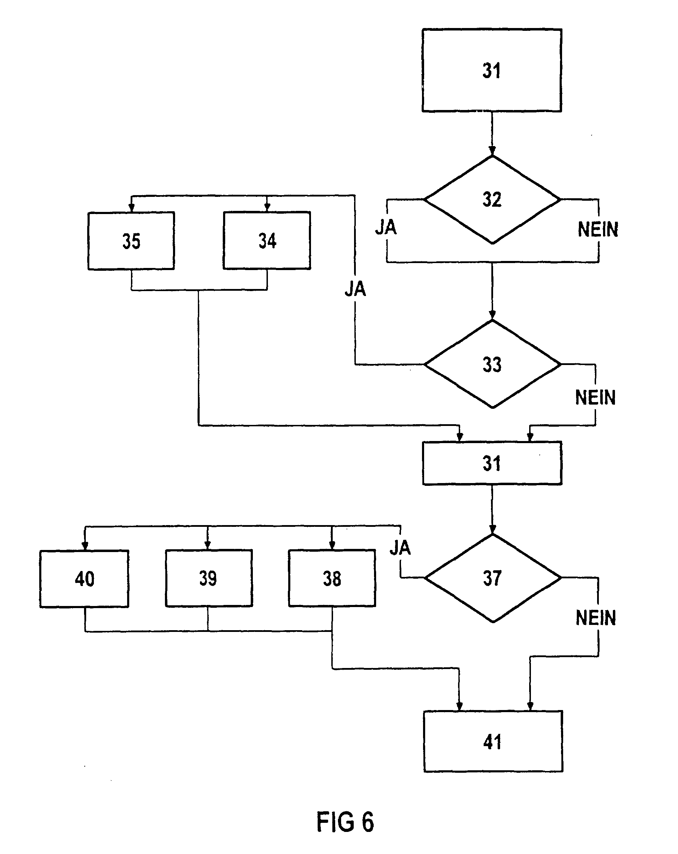

FIG 6 zeigt ein Ablaufdiagramm eines derartigen Prozesses, in dem z.B. die Formspule 15 durch Induktoren 4 induktiv erwärmt wird 31, wobei die Ziehradien 6 wahlweise gekühlt werden können 32. Falls eine Pressung erforderlich ist 33, kann die Formspule 15 intervallgepreßt 34 oder dauernd gepreßt 35 werden. Die weitere induktive Erwärmung 31 der Formspule 15 findet sofern notwendig, mit gepreßter 34,35 oder nur eingelegter Formspule 15 statt. Falls eine Abkühlung 37 der gesamten Formspule 15 erforderlich ist, kann ohne Pressen 38 mit Pressen 39 oder durch Intervallpressen 40 geschehen. Nach dem Abkühlen 37 kann die Formspule 15 entnommen werden 41.

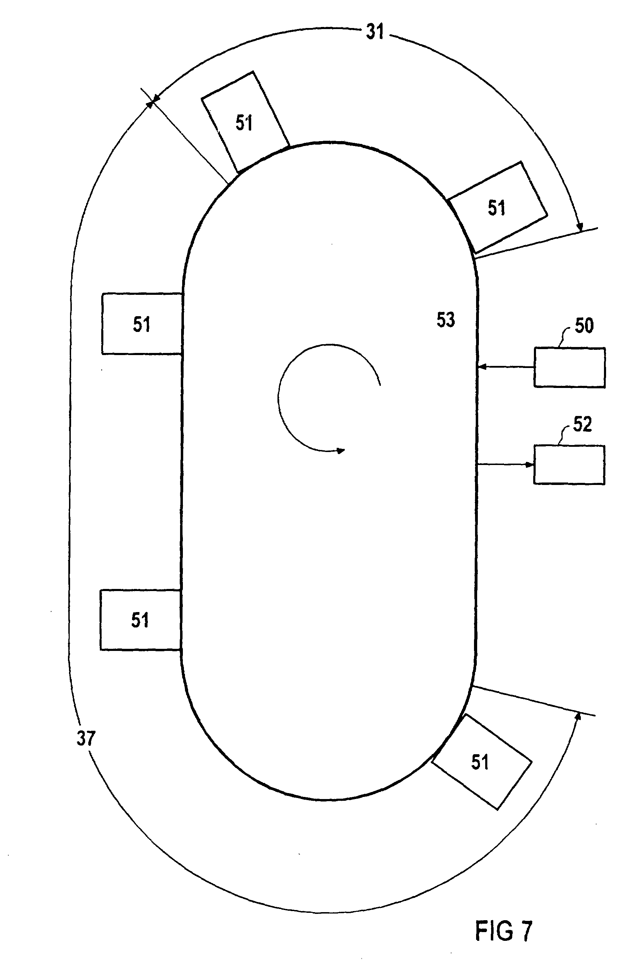

FIG 7 zeigt eine prinzipielle Darstellung eines kontinuierlichen Prozess auf einer Art Fertigungslinie 53 zur induktiven Erwärmung 31 bei gleichzeitiger wählbarer Kühlung 32 der Ziehradienbereich 6 von Wicklungsspulen 15, 17 und/oder Stäben 16. Dabei werden die Wicklungsspulen 15, 17 oder Stäbe 16 in eine oder mehrere nicht näher dargestellte bewegliche Pressvorrichtung 51 mit Presselementen 2 eingelegt 50 und anschließend in eine induktive Erwärmungsvorrichtung 1 mit Induktoren 4 bewegt. An diesen Bereich der induktiven Erwärmung 31 schließt sich ein Bereich der Abkühlung 37 der Wicklungsspulen 15, 17 oder Stäben 16 durch Kühlelemente 5 eines oder mehrerer Kühlsysteme 20 an. Bei 52 werden die Spulen der Fertigungslinie 53 wieder entnommen. Durch diese Anordnung kann der Durchsatz von bearbeiteten Wicklungsspulen 15, 17 oder Staben 16 wesentlich erhöht werden.

## Patentansprüche

1. Verfahren zur Verfestigung von Wicklungsspulen (15,17) oder Stäben (16) elektrischer Maschinen, welche Wicklungsspulen (15,17) und/ oder Stäbe, (16) Nuten- (7) und Spulenstirnseitenbereiche (9) aufweisen und aus mindestens einem mit verbackfähigem Material versehenen Einzelleitern bestehen, wobei
a) die beschichtete Leiterisolierung oder ein Leiterverband über induktive Erwärmung der elektrischen Leiter erwärmt wird (31), wobei die induktive Erwärmung auf die Nutenbereiche (7) begrenzt ist,
b) vor und/oder während des induktiven Erwärmungsvorganges (31) und/oder danach die Wicklungsspulen (15,17) oder Stäbe (16) gepreßt werden (34,35),
c) die Wicklungsspulen (15,17) oder Stäbe (16) gekühlt werden (32,37).

2. Verfahren nach Anspruch 1, **dadurch gekennzeichnet, daß** die Induktoren (4) nieder- mitteloder hochfrequent gespeist werden, und somit die Eindringtiefe der Wärmestrahlung skin-effekt-artig gesteuert werden kann.

3. Verfahren nach Anspruch 1 oder 2, **dadurch gekennzeichnet, da**ß
a) nur die später in den Nuten befindlichen Nutbereiche (7) der Wicklungsspulen (15,17) oder der Stäbe (16) induktiv erwärmt werden (31), und dabei gleichzeitig die nicht zu verfestigenden Spulenteile (9) gekühlt werden (32),
b) die anschließende Kühlung der erwärmten Teile durch das Kühlsystem (20) der induktiven Erwärmungsanlage (1) und/ oder durch mindestens ein weiteres Kühlsystem (20) erfolgen kann.

4. Verfahren nach einem der vorhergehenden Ansprüche, **dadurch gekennzeichnet, daß** die Verfahrenschritte kontinuierlich auf einer Art Fertigungslinie (53) durchlaufen werden oder mit bereits bekannten Einzel- oder 5 Mehrfachpressen durchgeführt werden, die an dieses Verfahren angepaßt sind, und für Wicklungsspulen (15/17) und/oder Stäbe (16) geeignet ist.

5. Vorrichtung zum Erwärmen von Wicklungsspulen (15,17) oder Stäben (16) elektrischer Maschinen,welche Wicklungsspu-10 len (15,17) und/oder Stäbe (16), Nut- (7) und Spulenstirnseitenbereiche (9) aufweisen und aus mindestens einem mit verbackfähigen Material versehenen Einzelleitern bestehen, **dadurch gekennzeichnet, daß** Induktoren (4) und Kühlelemente (5) vorhanden sind, womit die Erwärmung induktiv durchführbar ist und auf die Nutenbereiche (7) begrenzt ist.

6. Vorrichtung nach Anspruch 5, **dadurch gekennzeichnet, daß** sie Preßelemente (2) aufweist, womit vor und/oder während und/ oder nach dem Erwärmungsvorgang durch Induktoren (4) die Wicklungsspulen (15,17) oder Stäbe (16) preßbar sind. 20

7. Vorrichtung nach Anspruch 6, **dadurch gekennzeichnet, daß** mindestens ein Kühlsystem (20) für Nut- (7) und Spulenstirnseitenbereiche (9) vorhanden ist. 25

8. Vorrichtung nach Anspruch 7, **dadurch gekennzeichnet, daß** das den Induktor (4) kühlende Kühlsystem (20) und mindestens ein weiteres Kühlsystem (20) vorhanden ist.

9. Fertigungslinie (53) mit einer Vorrichtung nach einem der vorhergehenden Ansprüche 5-8, wobei über die Geschwindigkeit der Fertigungslinie (53) der Erwärmungs prozess (31) zusätzlich Steuerbar ist.

## Claims

1. Method for consolidating winding coils (15, 17) or rods (16) of electrical machines, said winding coils (15, 17) and/or rods (16) having groove face areas (7) and coil face areas (9) and comprising at least one individual conductor provided with a curable material, whereby
a) the coated conductor insulation or a conductor assembly is heated by inductively heating the electrical conductor (31), whereby the inductive heating is limited to the groove areas (7),
b) the winding coils (15, 17) or rods (16) are pressed prior to and/or during the inductive heating process (31) and/or after it (34, 35),
c) the winding coils (15, 17) or rods (16) are cooled (32, 37).

2. Method according to Claim 1, **characterized in that** the inductors (4) are supplied with a low-frequency power, medium-frequency power or high-frequency power and the penetration depth of the heat radiation is thereby controlled via a skin effect.

3. Method according to Claim 1 or 2, **characterized in that**
a) only the groove areas (7) of the winding coils (15, 17) or the rods (16) present later in the grooves are heated inductively (31) and the parts of the coil (9) not to be consolidated are thereby cooled at the same time (32),
b) subsequent cooling of the heated parts can be effected by the cooling system (20) of the inductive heating unit (1) and/or by at least one further cooling system (20).

4. Method according to one of the preceding Claims, **characterized in that** the method stages are performed continuously on a type of production line (53) or are implemented with already known single-stage or multistage presses, which are tailored to this method and is suitable for winding coils (15, 17) and/or rods (16).

5. Device for heating winding coils (15, 17) or rods (16) of electrical machines, said winding coils (15, 17) and/or rods (16) having groove face areas (7) and coil face areas (9) and comprising at least one individual conductor provided with a curable material, **characterized in that** inductors (4) and cooling elements (5) are available, with which the heating process can be effected inductively and is limited to the groove areas (7).

6. Device according to Claim 5, **characterized in that** it comprises press elements (2), with which the winding coils (15, 17) or rods (16) can be pressed before and/or during and/or after the heating process by means of inductors (4).

7. Device according to Claim 6, **characterized in that** at least one cooling system (20) is available for groove face areas (7) and coil face areas (9).

8. Device according to Claim 7, **characterized in that** the cooling system (20) cooling the inductor (4) and at least one further cooling system (20) are available.

9. Assembly line (53) with a device according to one of the preceding Claims 5-8, whereby the heating process (31) can also be controlled via the velocity of the assembly line (53).

## Revendications

1. Procédé pour consolider des bobines à spires (15, 17) ou des barres (16) sur des machines électriques, lesquelles bobines à spires (15, 17) et/ou barres (16) présentent des zones frontales d'encoche (7) et de bobine (9) et se composent d'au moins un conducteur unique muni de matériau susceptible de cuisson, selon lequel
a) l'isolation revêtue du conducteur ou un assemblage de conducteurs est chauffé (31) en échauffant par induction le conducteur électrique, l'échauffement par induction étant limité aux zones d'encoche (7),
b) avant et/ou pendant l'opération d'échauffement par induction (31) et/ou ensuite, les bobines à spires (15, 17) ou les barres (16) sont pressées (34, 35),
c) les bobines à spires (15, 17) ou les barres (16) sont refroidies (32, 37).

2. Procédé selon la revendication 1, **caractérisé en ce que** les inducteurs (4) sont alimentés à basse, à moyenne ou à haute fréquence et par conséquent la profondeur d'action du rayonnement de chaleur peut être commandée par effet pelliculaire.

3. Procédé selon la revendication 1 ou 2, **caractérisé en ce que**
a) seules les zones d'encoche (7) - placées ultérieurement dans les encoches - des bobines à spires (15, 17) ou des barres (16) sont chauffées par induction (31) et en même temps les parties de bobine (9) qu'il n'est pas nécessaire de consolider sont refroidies (32),
b) le refroidissement ultérieur des parties chauffées peut être réalisé par le système de refroidissement (20) de l'installation d'échauffement (1) par induction et/ou par au moins un autre système de refroidissement (20).

4. Procédé selon l'une des revendications précédentes, **caractérisé en ce que** les étapes de procédé sont exécutées en continu par une sorte de chaîne de fabrication (53) ou sont exécutées par une compression simple ou multiple, déjà connue, qui est adaptée à ce procédé et qui convient à des bobines à spires (15, 17) et/ou à des barres (16).

5. Dispositif pour chauffer des bobines à spires (15, 17) ou des barres (16) sur des machines électriques, lesquelles bobines à spires (15, 17) et/ou barres (16) présentent des zones frontales d'encoche (7) et de bobine (9) et se composent d'au moins un conducteur unique muni de matériau susceptible de cuisson, **caractérisé en ce qu'**il comprend des inducteurs (4) et des éléments de refroidissement (5) à l'aide desquels l'échauffement par induction peut être réalisé et limité aux zones d'encoche (7).

6. Dispositif selon la revendication 5, **caractérisé en ce qu'**il présente des éléments de compression (2) à l'aide desquels les bobines à spires (15, 17) ou les barres (16) peuvent être pressées par des inducteurs (4) avant et/ou pendant et/ou après l'opération d'échauffement.

7. Dispositif selon la revendication 6, **caractérisé en ce qu'**on a au moins un système de refroidissement (20) pour les zones frontales d'encoche (7) et de bobine (9).

8. Dispositif selon la revendication 7, **caractérisé en ce qu'**il présente le système de refroidissement (20) qui refroidit l'inducteur (4) et au moins un autre système de refroidissement (20).

9. Chaîne de fabrication (53) comportant un dispositif selon l'une des revendications précédentes 5 à 8, sur laquelle l'opération d'échauffement (31) peut en outre être commandée par la vitesse de la chaîne de fabrication (53).
